# EUROPEAN PATENT APPLICATION

(11) **EP 3 246 867 A1**
(43) Date of publication of application: **22.11.2017**
(21) Application number: 17154406.7
(22) Date of filing: 02.02.2017
(51) Int. Cl.: G06Q 20/32, G06Q 20/34

(54) **MOBILE TERMINAL AND CONTROL METHOD THEREOF**

(30) Priority: 16.05.2016 KR 20160059761
(71) Applicant: LG ELECTRONICS INC., Yeongdeungpo-gu Seoul, 07336 (KR)
(72) Inventor: YOON, Donghan, 06772 Seoul (KR); CHO, Junho, 06772 Seoul (KR); NAM, Soohyun, 06772 Seoul (KR); LEE, Sanghak, 06772 Seoul (KR); CHANG, Seungyup, 06772 Seoul (KR); KIM, Dongmin, 06772 Seoul (KR)
(74) Representative: Cabinet Plasseraud

(57) **Abstract**

A mobile terminal includes a main body including a controller and having one side opened, and a card module detachably installed at one side of the main body and having an accommodation region formed to allow a card to be drawn in or drawn out, wherein when it is sensed that a card is drawn in the accommodation region, the controller operates in any one of a payment mode in which payment is performed and an approval mode in which payment is approved, on the basis of presence of a magnetic applet on the card drawn in the accommodation region.

## Description

### BACKGROUND OF THE INVENTION

### 1. Field of the Invention

The present disclosure relates to a mobile terminal providing a payment service and a control method thereof.

### 2. Background of the Invention

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. More recently, mobile terminals have been configured to receive broadcast and multicast signals which permit viewing of content such as videos and television programs.

As functions of the terminal become more diversified, the terminal can support more complicated functions such as capturing images or video, reproducing music or video files, playing games, receiving broadcast signals, and the like. By comprehensively and collectively implementing such functions, the mobile terminal may be embodied in the form of a multimedia player or a device.

Efforts are ongoing to support and increase the functionality of mobile terminals. Such efforts include software and hardware improvements, as well as changes and improvements in the structural components.

Meanwhile, as a fintech service combining finance and technology has been developed, a payment service through mobile terminals has emerged. This payment service advances toward various services from a hardware-based mobile simple payment service to an application-based simple payment service.

As part of hardware-based mobile simple payment service, an all-in-one card service in which information of several cards is stored in a single card and payment is performed using the single card may be provided.

However, the all-in-one card includes various electronic components, incurring high costs in manufacturing all-in-one cards, and since only a contact-type card payment is allowed, the all-in-one card should be taken out whenever card payment is made, causing user inconvenience.

### SUMMARY OF THE INVENTION

Therefore, an aspect of the detailed description is to expand a payment function of a mobile terminal.

Another aspect of the detailed description is to provide a method for performing non-contact type payment of a card available for contact type payment.

Another aspect of the detailed description is to provide an intuitive control method related to a payment service of a mobile terminal.

Another aspect of the detailed description is to propose a structure for combining a mobile terminal and a card.

To achieve these and other advantages and in accordance with the purpose of this specification, as embodied and broadly described herein, a mobile terminal includes: a main body including a controller and having one side opened; and a card module detachably installed at one side of the main body and having an accommodation region formed to allow a card to be drawn in or drawn out, wherein when it is sensed that a card is drawn in the accommodation region, the controller operates in any one of a payment mode in which payment is performed and an approval mode in which payment is approved, on the basis of presence of a magnetic applet on the card drawn in the accommodation region.

In an embodiment, the card module may include: an IC controller disposed in a position facing an IC chip unit of the card drawn in the accommodation region to transmit and receive data to and from the card; and a microcontroller controlling the IC controller to determine whether a magnetic applet is present on the card.

In an embodiment, when it is determined that a magnetic applet is present on the card through the IC controller, the microcontroller may transmit a notification signal indicating the presence of the magnetic applet to the controller.

In an embodiment, the card module may further include a sensing unit positioned on an inner surface of the accommodation region to sense whether a card is drawn in the accommodation region, and when insertion of a card into the accommodation region is sensed through the sensing unit, the microcontroller may transmit a notification signal indicating the insertion of the card into the accommodation region to the controller.

In an embodiment, the mobile terminal may further include: a display unit, wherein when a magnetic applet is present on the card, the controller may operate in the payment mode, and display a card image respectively matched to at least one card information stored in the card on the display unit to select a card for payment among at least one card information stored in the card.

In an embodiment, when a specific card for payment is selected among the at least one card information, the controller may receive one-time password information from a payment server corresponding to the selected specific card, and transmit the one-time password information to the card module.

In an embodiment, the card module may transmit the one-time password information to the card in order to receive magnetic information for payment from the card.

In an embodiment, the card module may transmit a magnetic stripe signal outwardly on the basis of the magnetic information received from the card.

In an embodiment, the card module may further include a coil converting an electric signal into a magnetic signal.

In an embodiment, the magnetic information may be information including a combination of the one-time password information and the card information.

In an embodiment, when a magnetic applet is not present on the card, the controller may operate in a payment approval mode.

In an embodiment, in a state in which the controller operates in the payment approval mode, when payment amount information is input, the controller may receive card information of the card drawn in the accommodation region from the card module, and perform payment on the basis of the received card information.

In an embodiment, the mobile terminal may further include: a power supply unit supplying power to the main body; a first contact terminal disposed on one side of the power supply unit; and a second contact terminal installed in the card module and disposed on a side of the card module facing the first contact terminal so as to be electrically connected to the first contact terminal, wherein the controller may supply power through the first contact terminal and the second contact terminal such that the card module converts an electric signal into a magnetic signal.

In an embodiment, the accommodation region may be formed on a rear side of the main body in an overlapping manner.

In an embodiment, the card module may further include a coil converting an electric signal into a magnetic signal, and the coil may be disposed in a position farther than the card with respect to the main body.

To achieve these and other advantages and in accordance with the purpose of this specification, as embodied and broadly described herein, a method for controlling a mobile terminal performing a payment function includes: sensing that a card is drawn on a card module; when it is sensed that the card is drawn on the card module, determining whether a magnetic applet is present on the card; and operating in any one of a payment mode in which payment is performed and a payment approval mode in which payment is approved, on the basis of whether the magnetic applet is present on the card.

In an embodiment, in the operating in any one mode, when the magnetic applet is present on the card, the mobile terminal operates in the payment mode, and in the payment mode, the method may include: receiving one-time password information from a server linked to the card drawn in an accommodation space; and transmitting the one-time password information to the card module such that the one-time password information is converted into magnetic information.

In an embodiment, the card module may transmit the one-time password information to the card, and after transmission of the one-time password information to the card, the card module may receive magnetic information from the card.

In an embodiment, the magnetic information may be information including a combination of the one-time password information and card information of the card.

In an embodiment, in the operating in any one mode, when the magnetic applet is not present on the card, the mobile terminal may operate in a payment approval mode, and in the payment approval mode, the method may include: inputting a payment amount; receiving card information of the card through the card module; and paying the payment amount on the basis of the card information.

### BRIEF DESCRIPTION OF THE DRAWINGS

In the drawings:
FIG. 1A is a block diagram of a mobile terminal in accordance with the present disclosure.
FIGS. 1B and 1C are conceptual views of one example of the mobile terminal, viewed from different directions.
FIG. 2A is a block diagram illustrating a related art all-in-one card.
FIGS. 2B and 2C are a front view and a rear view of the related art all-in-one card.
FIG. 2D is a block diagram illustrating a card related to the present disclosure.
FIG. 3 is a block diagram illustrating a card module related to the present disclosure.
FIG. 4A is a conceptual view illustrating a card module.
FIG. 4B is an exploded view of the card module of FIG. 4A.
FIG. 4C is a cross-sectional view taken along line A-A' of FIG. 4A.
FIG. 5 is a flow chart illustrating a method of providing a payment service in a mobile terminal related to the present disclosure.
FIGS. 6A to 6C are conceptual views illustrating a method of executing a payment service in a mobile terminal related to the present disclosure.
FIGS. 7A and 7B are flow charts illustrating a control method of performing payment in a payment mode in a mobile terminal related to the present disclosure.
FIG. 8 is a conceptual view illustrating a method of performing payment in a payment mode related to the present disclosure.
FIG. 9 is a flow chart illustrating a control method related to one-time password information in a payment mode in a mobile terminal related to the present disclosure.
FIG. 10 is a conceptual view illustrating the control method of FIG. 9.
FIGS. 11A and 11B are flow charts illustrating a payment approval procedure performed in a payment approval mode in a mobile terminal related to the present disclosure.
FIG. 12 is a conceptual view illustrating an en example of approving payment in a payment approval mode in a mobile terminal related to the present disclosure.
FIG. 13 is a conceptual view illustrating another example of approving payment in a payment approval mode in a mobile terminal related to the present disclosure.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

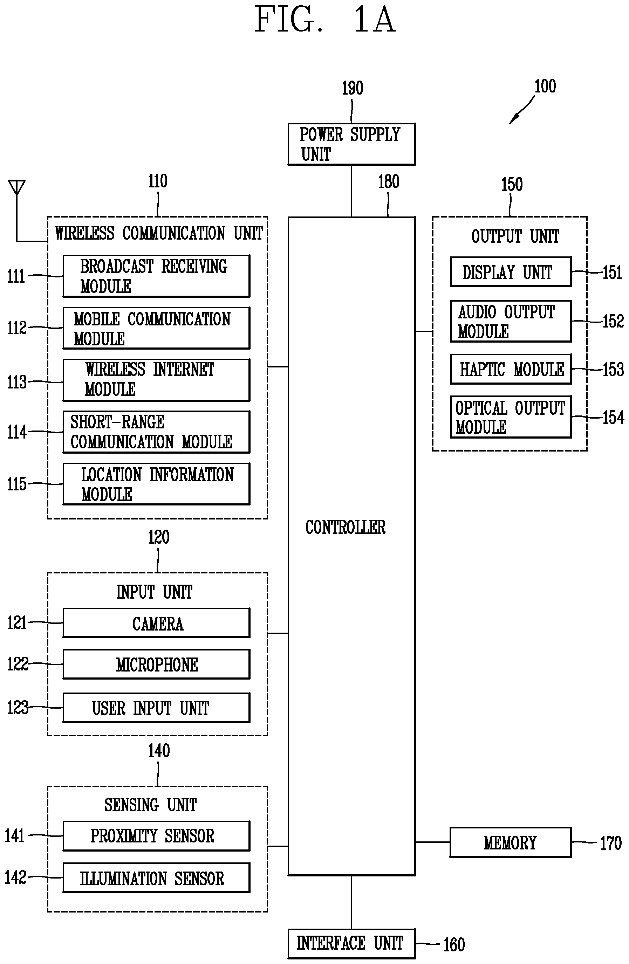

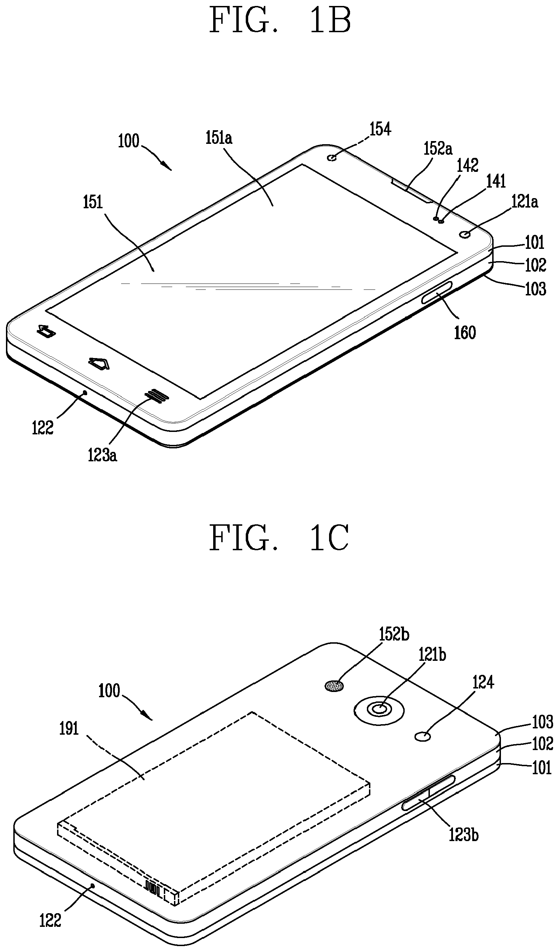

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a control unit 180, and a power supply unit 190. It is understood that implementing all of the illustrated components is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server.

Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by control unit 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the control unit 180 to perform an operation (or function) for the mobile terminal 100.

The control unit 180 typically functions to control overall operation of the mobile terminal 100, in addition to the operations associated with the application programs. The control unit 180 may provide or process information or functions appropriate for a user by processing signals, data, information and the like, which are input or output by the various components depicted in Fig. 1A, or activating application programs stored in the memory 170. As one example, the control unit 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least some of the above components may operate in a cooperating manner, so as to implement an operation or a control method of a glass type terminal according to various embodiments to be explained later. The operation or the control method of the glass type terminal may be implemented on the glass type terminal by driving at least one application program stored in the memory 170.

Hereinafter, a method for extending a camera function of a mobile terminal having at least one of the aforementioned components will be described with reference to the accompanying drawings.

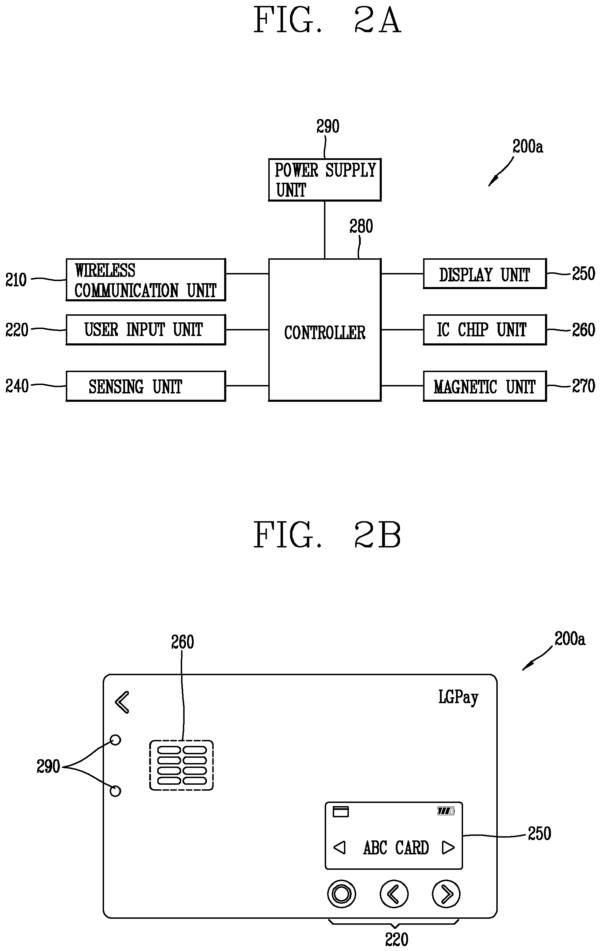

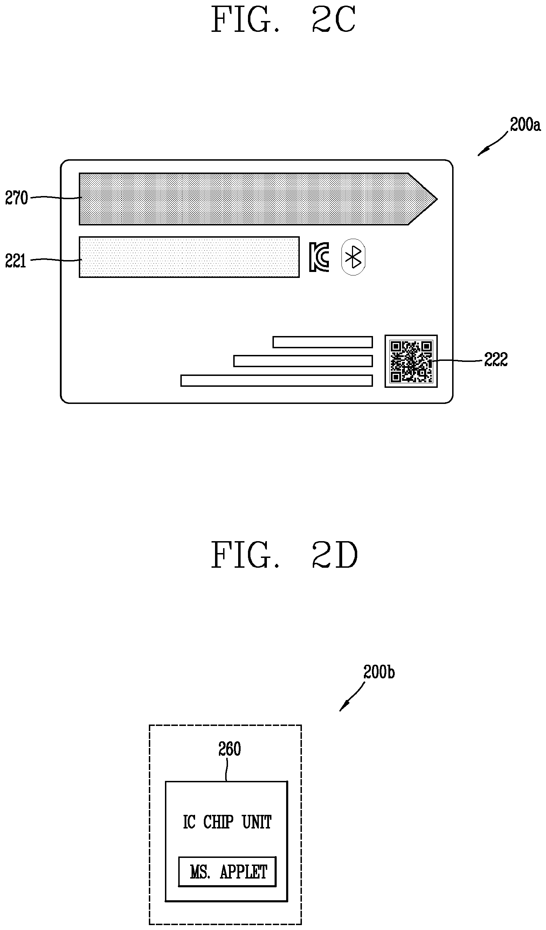

FIG. 2A is a block diagram illustrating a related art all-in-one card, FIGS. 2B and 2C are a front view and a rear view of the related art all-in-one card, and FIG. 2D is a block diagram illustrating a card related to the present disclosure.

Referring to FIG. 2A, an all-in-one card 200a includes a wireless communication unit 210, a user input unit 220, a sensing unit 240, a display unit 250, an IC chip unit 260, a magnetic unit 270, a controller 280, and a power supply unit 290. It is understood that implementing all of the illustrated components is not a requirement, and that greater or fewer components may alternatively be implemented.

The wireless communication unit 210 includes one or more modules enabling communication with the mobile terminal 100. Also, the wireless communication unit 210 may include one or more modules connecting the mobile terminal 100 to one or more networks.

The wireless communication unit 210 may support short-range communications using at least one of Bluetooth^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The user input unit 220 serves to receive information from a user. When information is input through the user input unit 123, the controller 280 may control an operation of the all-in-one card 200a to correspond to the input information. The user input unit 220 may be configured as a mechanical button or a touch button. Meanwhile, the user input unit 220 may perform roles the same as or similar to those of the user input unit 123, and thus, a detail description thereof will be replaced with the description of the user input 123 of FIG. 1A.

The sensing unit 240 serves to detect whether a coil related to a payment machine is present in a vicinity of the all-in-one card 200a. In detail, when the all-in-one card 200a comes into contact with the payment machine (point-of-sale (POS) device), the sensing unit 240 may sense reception of a specific signal (e.g., a reset signal) from the coil of the payment machine. When the sensing unit 240 senses the specific signal, the controller 280 of the all-in-one card 200a may recognize that paying starts, and starts a payment operation.

The display unit 250 may be provided to visually output information. The display unit 250 may form a layered structure with a touch sensor to allow a touch application. Also, the display unit 250 may be an e-paper display (EPD) so as not to affect a thickness of the main body of the all-in-one card 200a.

The IC chip unit 260, which serves to safely store and generate card information, includes one or more modules such as a CPU, a memory, a physical security element (SE), and the like. Information of one or more cards may be safely stored in the IC chip unit 260, and the card information stored in the IC chip unit 260 is configured not to be leaked outwardly. The IC chip unit 260 may be, for example, IC 7816 chip. The IC 7816 chip is a chip storing and generating IC information appropriate for standards. The security element is a module storing an electronic signature, and an electronic signature generation key may be positioned in the security element such that the electronic signature cannot be leaked outwardly.

The magnetic unit 270, which serves to generate a magnetic stripe signal, may be configured as a magnetic band storing magnetic information, configured to include a magnetic record layer as a thin coated film storing magnetic information, or configured as a coil converting a current into magnetism.

The magnetic unit 270 may generate a magnetic stripe signal on the basis of card information of a user programmed magnetic card. That is, the magnetic unit 270 may be provided to generate a magnetic strip signal on the basis of card information selected according to a user request, among a plurality of pieces of card information, rather than being the related art magnetic band storing one magnetic information. In other words, the magnetic unit 270 may generate various magnetic stripe signals.

In order to generate a magnetic stripe signal, the magnetic unit 270 may include a booster. The booster serves to amplify a current signal.

In order to perform payment, the controller 180 may control the aforementioned elements. For example, when one of a plurality of pieces of card information stored in the IC chip unit 260 is selected, the controller 280 may transmit the selected card information to the magnetic unit 270 such that payment may be performed, to transmit a magnetic stripe signal to the outside.

The power supply unit 290 may be provided to supply power to the elements forming the all-in-one card 200a. The power supply unit 190 may include a chargeable battery, and the battery may be an internal battery or a replaceable battery. The power supply unit 290 may charge the battery with power received from a charge cradle dedicated for the all-in-one card 200a.

Meanwhile, although not shown, the all-in-one card 200a may further include a memory storing information related to an operation of the all-in-one card 200a, a charge protecting circuit for protecting the battery of the power supply unit, and a load switch responsible for switching between the controller and the IC chip unit. These components may be generally understood by persons skilled in the art, so a detailed description thereof will be omitted.

Referring to FIG. 2B, the user input unit 220, the display unit 250, the IC chip unit 260, and power supply unit 290 may be provided in a front side of the all-in-one card 200a.

The all-in-one card 200a may have a quadrangular thin main body similar to that of an existing magnetic card. Hereinafter, a front side and a rear side of the all-in-one card 200a will be described.

The user input unit 220 may be configured as a touch button and may be provided to receive a user input for controlling an operation of the all-in-one card 200a.

The display unit 250 may be disposed in a portion or the entirety of the front side of the all-in-one card 200a to visually output card information of one or more cards stored in the IC chip unit 260. Also, the display unit 250 may form a layered structure with a touch sensor to receive a touch input applied to the display unit 250.

The IC chip unit 260 may be disposed in a partial region of the front side of the all-in-one card 200a and configured to be brought into contact with a contact terminal provided in a payment machine when the all-in-one card 200a is inserted into the payment machine. When the IC chip unit 260 comes into contact with the contact terminal, the payment machine may receive card information from the IC chip unit 260 to perform payment.

The power supply unit 290 may be disposed in a region of the front side of the all-in-one card 200a and contacts an external charge terminal of the all-in-one card 200a to receive power from the external charge terminal.

Referring to FIG. 2C, the magnetic unit 270, a signature column 221, and a QR code 222 may be disposed on the rear side of the all-in-one card 200a.

The magnetic unit 270 may have a magnetic band to generate a magnetic stripe signal when contact the payment machine. Here, the magnetic band may be disposed at one edge of the rear side of the all-in-one card 200a. The magnetic band may be configured as a dynamic coil to generate a magnetic stripe signal of a card selected by the user. That is, the magnetic unit 270 may be configured as a dynamic coil capable of generating various magnetic stripe signals, rather than as a magnetic band storing one magnetic information.

The signature column 221 is a region in which the user writes down a signature therein, to identify the user of the all-in-one card 200a. The user may write down a signature in the signature column 221 using a writing article (e.g., a ballpoint pen).

The QR code 222 may convert information into 2D image and store the same. The QR code 222 may include card loss service center information, card user contact information, and the like.

So far, the all-in-one card 200a has been described. Hereinafter, a payment card according to the present disclosure will be described.

Referring to FIG. 2D, a payment card 200b according to the present disclosure may include an IC chip unit 260. Here, the payment card 200b according to the present disclosure may not include the other components included in the all-in-one card 200a, for example, the wireless communication unit 210, the user input unit 220, the sensing unit 240, the display unit 250, and the magnetic unit 270.

That is, the payment card 200b according to the present disclosure may be a car including only the IC chip unit 260, like the related art IC card having an IC chip.

Meanwhile, the IC chip unit 260 of the payment card 200b may further include a magnetic applet (MS applet) within the IC chip unit 260, unlike the related art IC card. The magnetic applet refers to a small application program including magnetic information for generating a magnetic stripe signal. The magnetic applet may be stored in a memory of the IC chip unit.

The magnetic information included in the magnetic applet may be information different in each card. Also, the magnetic information may be transferred to a coil so as to be converted into a magnetic stripe signal according to standards.

So far, the card according to the present disclosure has been described. As mentioned above, the card according to the present disclosure is implemented in the form storing only the magnetic applet on the IC chip unit, thus reducing card manufacturing costs, unlike the related art all-in-one card.

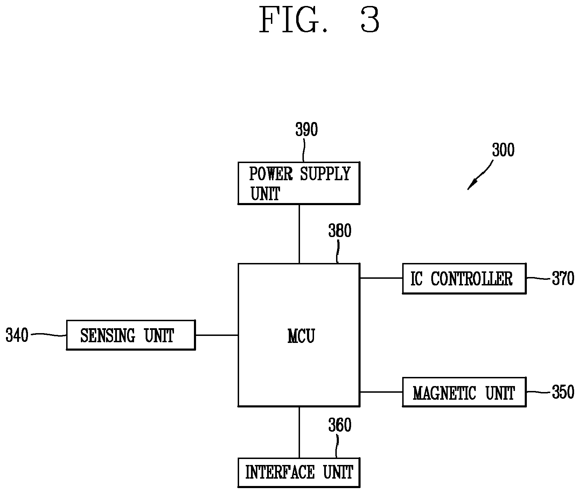

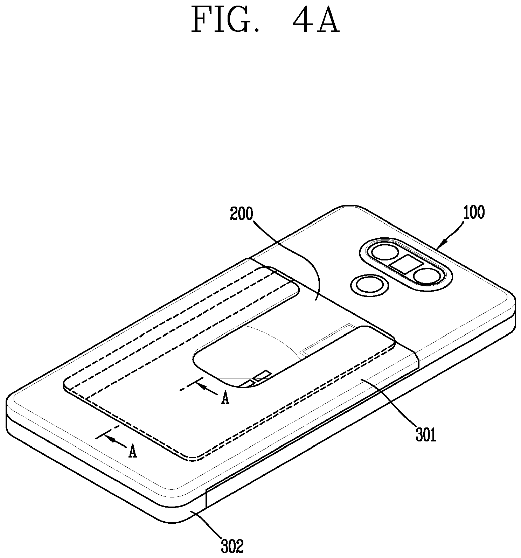

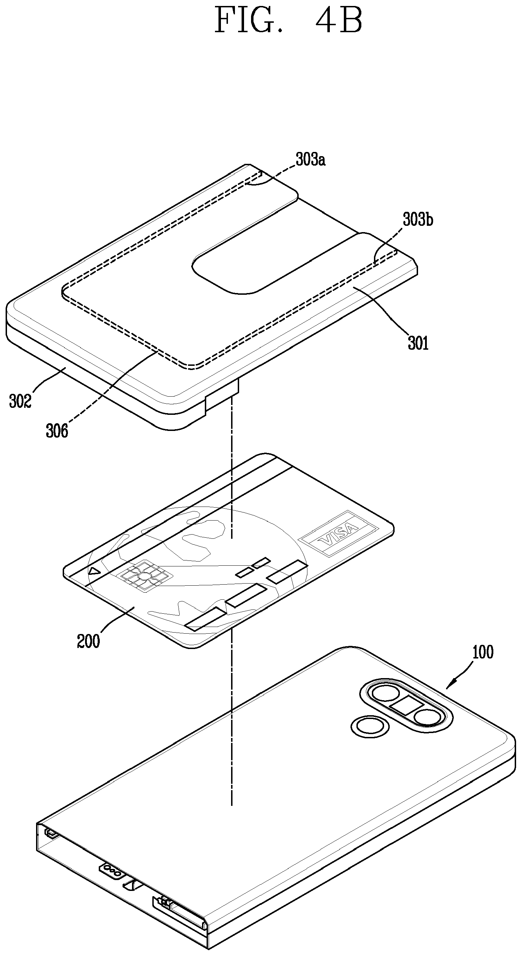

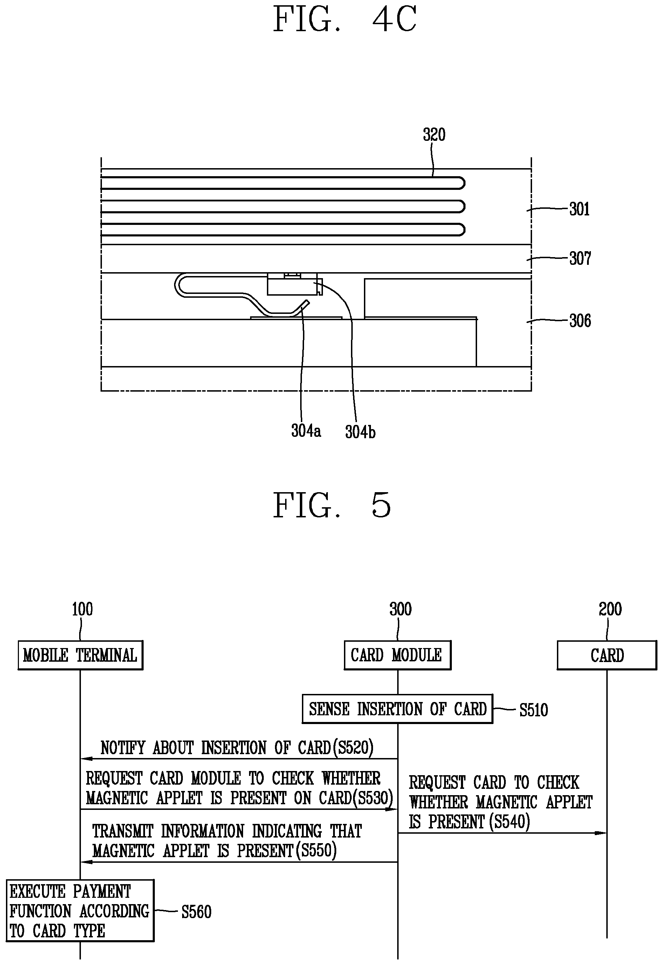

FIG. 3 is a block diagram illustrating a card module related to the present disclosure. FIG. 4A is a conceptual view illustrating a card module, FIG. 4B is an exploded view of the card module of FIG. 4A, and FIG. 4C is a cross-sectional view taken along line A-A' of FIG. 4A.

Referring to FIG. 3, a card module 300 related to the present disclosure may include a sensing unit 340, an interface unit 360, an IC controller 370, a magnetic unit 350, a microcontroller unit (MCU) 380, and a power supply unit 390.

The sensing unit 340 may be configured to sense that a card is drawn into the card module or drawing out from the card module 300. The sensing unit 340 may be configured as a hall sensor sensing a change in magnetism, a button module physically deformed due to insertion or withdrawal of the card, and a sensor sensing a voltage level, and is not limited to an implementation form.

The interface unit 360 may serve as an interface between the card module 300 and a mobile terminal, between the card module 300 and a charge cradle, and between the card module 300 and a card. For example, the interface unit 360 may include a USB communication port for performing USB communication between the card module 300 and a mobile terminal, an external charge port for supplying power between the card module and a charge cradle, a data port for transmitting and receiving power between the card module 300 and a card, and the like. The USB communication port may serve as an interface electrically connecting a circuit board of the card module and a circuit board of a mobile terminal. A detailed description of the interface 360 will be replaced with the description of FIG. 1A.

The IC controller 370 may be provided to transmit and receive data to and from the IC chip unit 260 provided in the card. The IC controller 370 may include an IC chip connection terminal. The IC chip connection terminal may be, for example, IC 7816. The IC 7816 terminal may check the presence of a magnetic applet in the IC chip unit 260 provided in the card or may receive magnetic information from the IC chip unit 260 provided in the card.

As described above with reference to FIG. 2A, the magnetic unit 350 may convert magnetic information into a magnetic stripe signal and transmit the same to the outside. Here, the magnetic unit 350 may be configured as a dynamic coil capable of converting magnetic information requested by the user into a magnetic stripe signal, rather than a magnetic band storing one magnetic information. The magnetic unit 350 performs an operation similar to that of the magnetic unit of FIG. 2A, and thus, an additional description thereof will be replaced with the description of FIG. 2A.

The microcontroller 380 may control the components forming the card module 300, execute a function using the card module 300. For example, the microcontroller 380 may control the IC controller 370 and check whether a magnetic applet is present in the IC chip unit 260 provided in the card. Also, the microcontroller 380 may inform the mobile terminal 100 about the presence of a magnetic applet through the interface unit 360.

The power supply unit 390 may be provided to supply power to the components forming the card module 300, and may include an internal or external rechargeable battery. Also, the power supply unit 390 may supply power to the card 200 drawn into the card module 300, as well as to the card module 300, or supply power to the mobile terminal 100 electrically connected to the card module 300

Also, the card module 300 may receive power from a mobile terminal electrically connected thereto. That is, the battery of the card module 300 may be charged with power supplied from the mobile terminal.

To this end, the card module 300 may further include a contact terminal for receiving power from the power supply unit 190 of the mobile terminal. In detail, the power supply unit 190 of the mobile terminal may having a first contact terminal disposed on one side thereof. Also, in the card module 300, a second contact terminal may be positioned in a region facing the first contact terminal such that the second contact terminal is electrically connected with the first contact terminal.

In this case, the card module 300 may receive power from the power supply unit 190 of the mobile terminal through the first and second contact terminals.

Referring to FIG. 4A, the card module 300 may include an accommodation region 301 and a sliding region 302.

The accommodation region 301 may have a receiving space to receive a card. The accommodation region 301 may be installed to overlap at least a portion of the rear side of the main body of the mobile terminal.

Also, the accommodation region 301 may have an opening region such that at least a portion of the card drawn into the accommodation region 301 is exposed. The user may apply external force to the card when the inserted card is drawn out through the opening region.

Also, the accommodation region 301 may include a sensing unit (not shown) for sensing the inserted card. The sensing unit may be implemented as a button, a switch, a magnetic hall sensor, and the like, and is not limited in a configuration thereof.

The sliding region 302 may extend in one direction from the accommodation region 301 and include a circuit board to be electrically connected to one side of the mobile terminal. The circuit board may be connected to a circuit of the mobile terminal to communicate with the mobile terminal or perform controlling through the mobile terminal.

Referring to FIG. 4B, the accommodation region 301 may include a pair of guide rails 303a and 303b protruding from both edges and allowing a card to slide when the card is drawn in, and a mounting part 306 positioned at one end portion of the guide rails 303a and 303b and fixing the card when the card is inserted.

A width of the pair of guide rails 303a and 303 may be equal to a width of the card, or may be slightly greater. The pair of guide rails 303a and 303b may have a recess provided in a central region such that both edges of the card may be inserted into the central portion of the guide rails 303a and 303b.

The mounting portion 306 may be configured to surround one end portion of the card drawn into the accommodation region 301 to fix the one end portion of the card. For example, as illustrated in FIG. 4C, a portion of the mounting portion 306 may protrude to overlap a portion of the card.

Referring to FIG. 4C, contact terminals 304a and 304b included in the IC controller 370 may be positioned in a region facing the IC chip unit 260 of the card drawn in the accommodation region 301.

The contact terminals 304a and 304b of the IC controller 370 may be connected to the circuit board 307 of the card module. The card board 307 may be electrically connected to the circuit board of the mobile terminal through the circuit board of the sliding unit 302. The circuit board of the sliding unit 302 may be electrically connected to the circuit board of the mobile terminal through a USB communication port.

As illustrated in FIG. 4C, the accommodation region 301 may further include a coil 305. The coil 305 may be disposed within or outside of the accommodation region 301.

Also, the coil 320 may be disposed in a position farther than the card drawn in the accommodation region 301 with respect to the main body of the mobile terminal. For example, as illustrated in FIG. 4C, the coil 305 may be positioned the farthest position from the main body of the mobile terminal, that is, at the outermost portion of the accommodation region 301. Thus, a magnetic stripe signal transmitted from the coil 305 may be transmitted to the outside, without being interfered with by the card or other circuits.

Meanwhile, the case in which the coil 305 is disposed within or outside of the accommodation region 301 has been described, but the coil 305 may be disposed within or outside of the rear side (e.g., the rear case 102 or the back cover 103, please refer to FIG. 1C) of the main body of the mobile terminal. In this case, the coil 305 may be disposed on a region of the rear side of the main body of the mobile terminal not overlapping the accommodation region 301 such that a magnetic stripe signal transmitted from the coil 305 is not interfered with by the card 200.

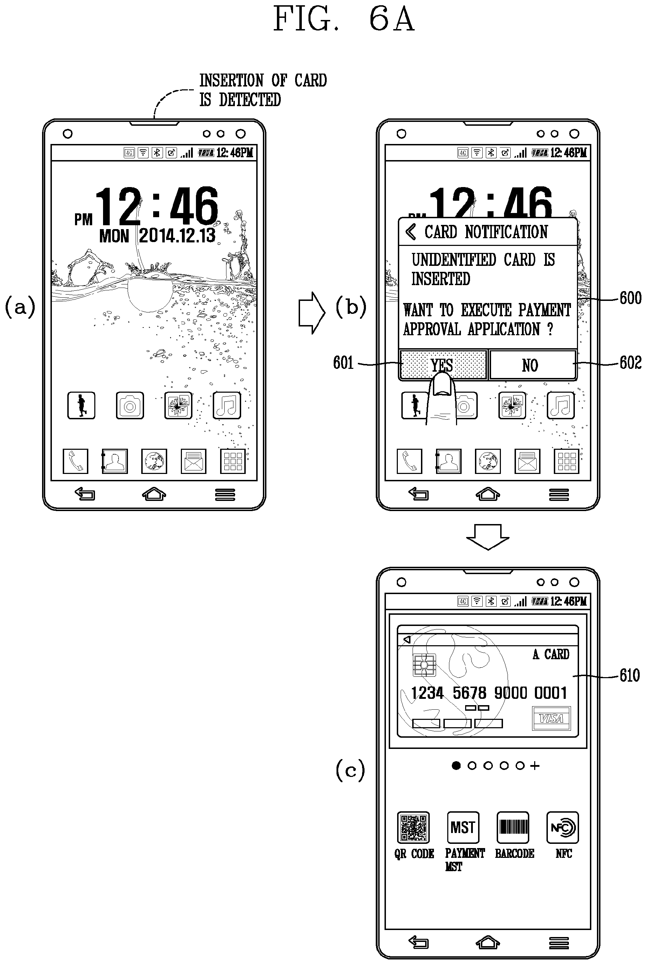

Hereinafter, a method for providing a payment service in the mobile terminal according to the present disclosure will be described. FIG. 5 is a flow chart illustrating a method of providing a payment service in a mobile terminal related to the present disclosure. FIGS. 6A to 6C are conceptual views illustrating a method of executing a payment service in a mobile terminal related to the present disclosure.

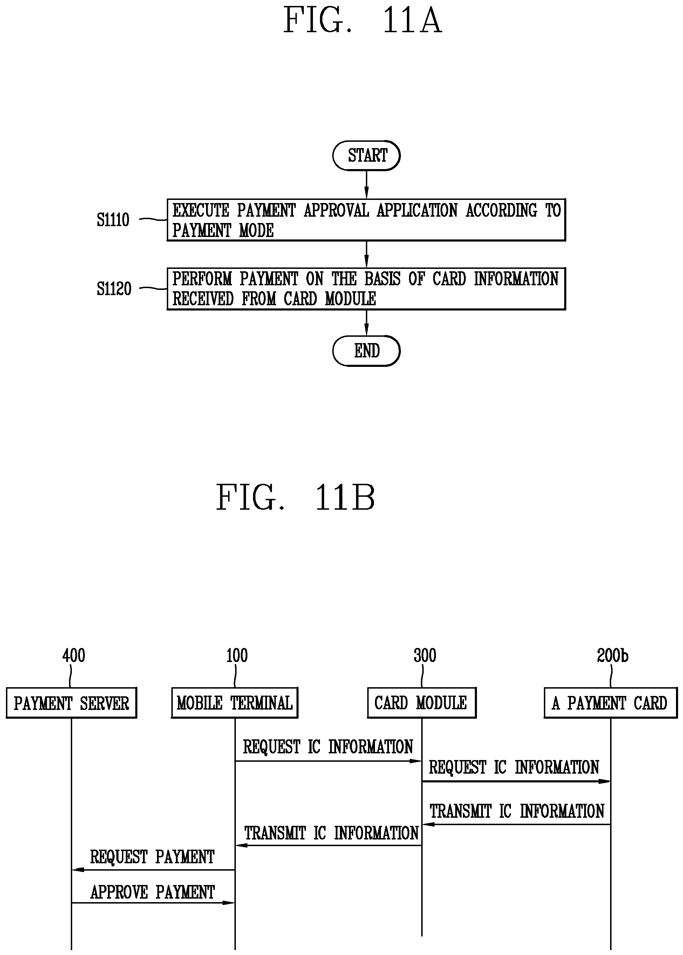

The payment service according to the present disclosure may perform payment using the mobile terminal 100, the card module 300 provided to be electrically connected to the mobile terminal 100, and the card 200 inserted into the card module. Here, the card module 300 may be the device described above with reference to FIG. 3, and the card 200 may be the payment card 200b described above with reference to FIG. 2D or may be a general IC card 200c (please refer to FIG. 11 B).

Hereinafter, when a term including both the payment card 200b described above with reference to FIG. 2D and the general IC card 200c is used, reference numeral 200 will be used, and when the cards are differentiated, reference numerals 200b and 200c will be used.

The general IC card 200c refers to a card including a currently distributed IC chip and a card performing payment using an IC chip. In the general IC card 200c, a magnetic applet is not stored in the IC chip, unlike the payment card 200b.

Meanwhile, the card module 300 may be detachably attached to the mobile terminal 100, hereinafter, it is assumed that the card module 300 is electrically connected to one side of the mobile terminal 100.

First, the card module 300 according to the present disclosure may sense whether the card 200 is drawn in the accommodation region 301 (S501).

The card module 300 may sense that the card 200 is drawn in or drawn out from the accommodation region 301 through the sensing unit 340. When the card 200 is drawn in the accommodation region 301, the sensing unit 340 may transmit a notification signal indicating that the card 200 is drawn in, to the microcontroller 380. For example, when a button module provided in the sensing unit 340 is pressed as the card 200 is drawn in, a voltage signal is connected to a ground GND by the button module, and the sensing unit 340 may transmit a notification signal indicating that a voltage is 0 by the ground to the microcontroller 380.

When the notification signal indicating that the card is drawn in is received from the sensing unit 340, the microcontroller 380 may transmit the notification signal to the controller 180 of the mobile terminal 100 (S520).

The microcontroller 380 may inform the mobile terminal 100 that the card 200 is drawn in the accommodation region 302. In detail, the microcontroller 380 may transmit the notification signal indicating the insertion of the card into the mobile terminal 100, through a USB communication port connected to the mobile terminal 100 wiredly.

When the card is drawn in, the controller 180 of the mobile terminal may transmit a request for checking whether there is a magnetic applet on the card to the card module 300 (S530).

When the notification information indicating that the card 200 is drawn in the accommodation region 301 is received from the card module 300, the controller 180 may perform a function related to payment.

Here, the controller 180 may perform in any one of a payment mode in which payment is performed and a payment approval mode in which payment is approved, according to types of the card 200.

Here, the types of the card 200 may be determined according to whether there is a magnetic applet. That is, as illustrated in FIG. 2D, the card 200 may be a first type payment card 200b having a magnetic applet or a second type general IC card 200c without a magnetic applet.

When notification information indicating that the card 200 is drawn in the accommodation region 301 is received from the card module 200, the controller 180 may request the microcontroller 380 of the card module 300 to check whether the card 200 has a magnetic applet in order to check a type of the card.

When the request for checking the presence of the magnetic applet is received, the microcontroller 380 may request the card 200 to check a presence of a magnetic applet (S540).

The microcontroller 380 may control the IC controller 370 to check whether a magnetic applet is present in the IC chip unit 260 of the card 200. The IC controller 370 may access the IC chip unit 260 of the card 200 through an IC chip connection terminal (e.g., IC 7816) to check whether a magnetic applet is present. In detail, the IC controller 370 may check whether a magnetic applet is stored in the IC chip unit 260.

After checking the presence of a magnetic applet, the IC controller 370 may transmit information indicating whether a magnetic applet is present in the card to the microcontroller 380.

The microcontroller 380 may transmit the information indicating whether a magnetic applet is present in the card to the controller 180 of the mobile terminal (S550).

When the presence of a magnetic applet is checked, the microcontroller 380 may transmit information indicating whether a magnetic applet is present in the card to the controller 180 of the mobile terminal 100 through a USB communication port electrically connected to the mobile terminal 100.

In this case, the controller 180 may operate in any one of a payment mode and a payment approval mode on the basis of the presence of a magnetic applet in the card 200 (S560).

In a case in which a magnetic applet is present in the card 200, the controller 180 may operate in the payment mode. That is, in a case in which the card 200 is determined as a first type payment card 200b, the controller 180 may operate in the payment mode.

The payment mode refers to an operational state of the mobile terminal performing a function of transmitting a magnetic stripe signal to the outside, i.e., a payment machine, using the magnetic applet present in the card 200b. That is, the payment mode refers to an operational state of the mobile terminal performing a non-contact type payment by transmitting a magnetic stripe signal within a short range, without bringing the card into contact with the payment machine.

When the controller 180 operates in the payment mode, the controller 180 may execute a payment application previously installed in the mobile terminal. The payment application is an application program executed to operate in the payment mode.

The payment application may be a basic application installed at the initial stage of a factory of the mobile terminal or may be an application downloaded through communication from an open market according to a user selection.

The payment application may provide various functions related to payment. For example, the payment application may provide an authentication function for performing payment, a card registration function, and the like.

Also, the payment application may provide various payment schemes, for example, an NFC payment scheme, a barcode payment scheme, a magnetic stripe transmission (MST) payment scheme, and the like. Here, the NFC payment function may be a function performing payment using NFC, and the MST payment function is a function of performing payment using magnetic information. That is, the MST payment function refers to a function performing payment by converting magnetic information into a magnetic stripe signal and transmitting the same to the outside.

Meanwhile, hereinafter, the case of performing payment according to the MST payment scheme will be described, but the present disclosure is not limited thereto and payment may be performed according to a specific payment scheme selected by the user from among various payment schemes.

As discussed above, in the present disclosure, payment may be performed according to the MST payment scheme by electrically connecting a contact type payment available card to the mobile terminal. Accordingly, the user may perform non-contact type payment using the contact type card.

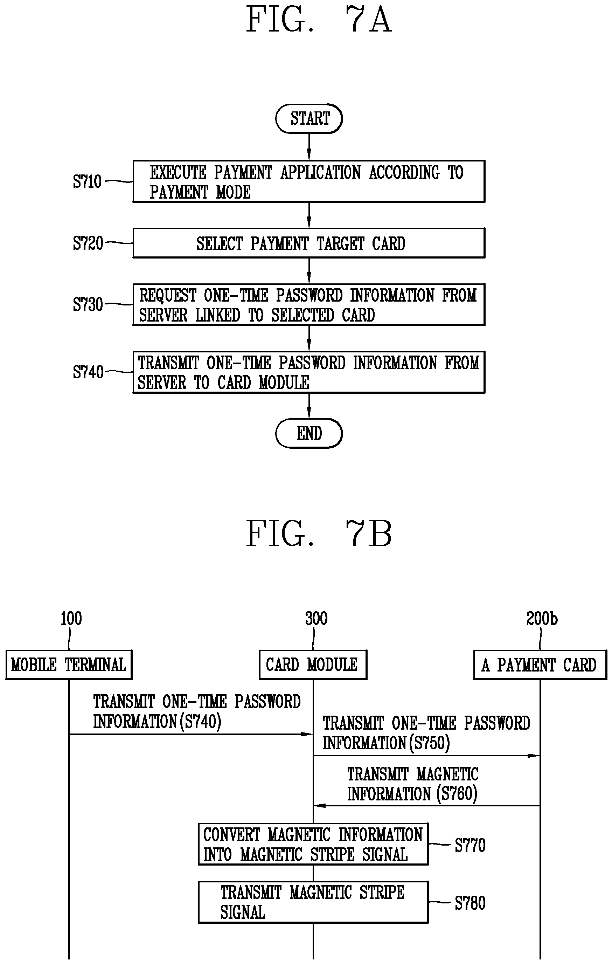

Specific controlling related to a payment mode will be described with reference to FIGS. 7 to 10.

Meanwhile, if the magnetic applet is not present in the card 200, the controller 180 may operate in a payment approval mode. That is, in a case in which the card 200 is determined as the second type card 200c, the controller 180 may operate in the payment approval mode.

The payment approval mode refers to an operational state of the mobile terminal of approving payment using card information stored in the IC chip unit 260 of the card 200c. That is, in the payment approval mode, the mobile terminal may perform the same role as a payment machine of approving payment using a card.

When the controller 180 operates in the payment approval mode, the controller 180 may execute a payment approval application. The payment approval application is an application program executed to operate in the payment approval mode.

The payment approval application may provide a function of inputting a payment amount for payment approval, a function of inputting a payment item, and a function of communicating with a payment server. The user may input various types of information for payment approval through the payment approval application. Also, the user may be provided with a person-to-person (P2P) payment service between individuals. Here, the P2P refers to a service of performing payment between individuals without passing through a payment machine.

Hereinafter, specific controlling related to the payment approval mode will be described with reference to FIGS. 11A to 13.

Meanwhile, when an electrical connection between the card module and the mobile terminal is released, the controller 180 may stop operation of the payment mode or the payment approval mode. In this case, the controller 180 may stop execution of the payment application or the payment approval application and output a home screen page on the display unit 151.

Or, the controller 180 may output notification information indicating that the electrical connection between the card module and the mobile terminal is released on the display unit 151. Thus, the user may recognize that payment using the card may not be performed any longer.

In the above, the control method of providing a payment service according to the present disclosure has been described. In this manner, the mobile terminal providing a payment service according to the present disclosure may automatically perform an appropriate function related to the card through only an operation of inserting the card by the user. Also, by providing the payment mode and the payment approval mode according to a type of an inserted card, the mobile terminal providing a payment service according to the present disclosure may perform various functions related to payment.

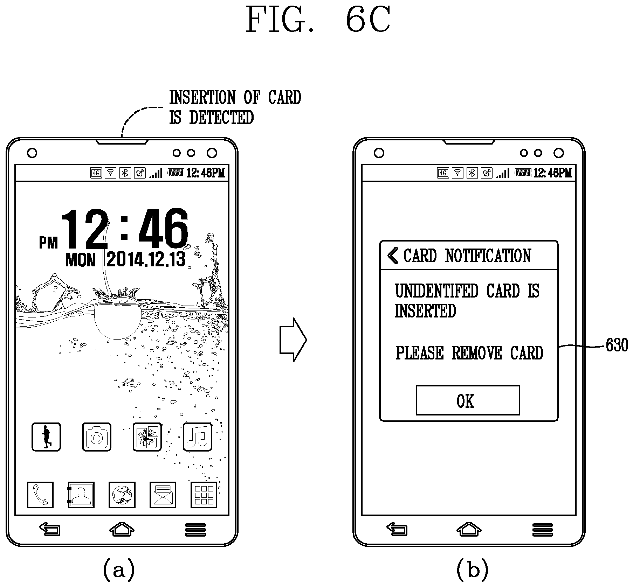

Hereinafter, an operation of the mobile terminal operated in the payment mode and the payment approval mode related to FIG. 5 will be described in detail with reference to FIGS. 6A and 6C.

When a notification signal indicating that a card is drawn in the accommodation region 301 is received from the card module 300, the controller 180 of the mobile terminal 100 according to the present disclosure may execute a payment function.

In detail, as illustrated in (a) of FIG. 6A, when a notification signal indicating that a card is drawn in is received, the controller 180 may output the notification information indicating the insertion of the card on the display unit 151. For example, as illustrated in (b) of FIG. 6A, the controller 180 may output notification information indicating insertion of the card on a pop-up window 600.

Here, the controller 180 may output the pop-up window 600 irrespective of a function currently executed in the mobile terminal. For example, as illustrated in (a) of FIG. 6A, in a state in which a home screen page is displayed on the display unit 151 of the mobile terminal, when a notification signal indicating insertion of the card is received, the controller 180 may output the pop-up window 600 on the home screen page.

The pop-up window 600 may include graphic objects 601 and 602 for determining whether to execute a payment application. When the user selects a graphic object 601 approving execution of the payment application among graphic objects 601 and 602 included in the pop-up window, the payment application may be executed. Also, when the user selects the graphic object 602 rejecting execution of the payment application among the graphic objects 601 and 602 included in the pop-up window 600, the payment application may not be executed.

Meanwhile, in the present disclosure, the payment application may be directly executed without outputting the pop-up window 600.

When the payment application is executed, an execution screen 610 of the payment application may be output on the display unit 151 as illustrated in (c) of FIG. 6A.

Meanwhile, after the insertion of the card 200 is sensed, the controller 180 may determine whether to operate in the payment mode or the payment approval mode on the basis of identification information of the inserted card 200.

To this end, when the insertion of the card 200 is sensed, the controller 180 may receive identification information of the inserted card.

In detail, the controller 180 may request identification information of the card 200 inserted into the card module 300, and receive the identification information from the card module 300.

Thereafter, the controller 180 may compare the received identification information with a plurality of pieces of card information stored in the memory 170. When the received identification information matches the plurality of pieces of card information stored in the memory 170 according to the comparison result, the controller 180 may operate as illustrated in (b) of FIG. 6A.

However, if the received identification information does not match the plurality of pieces of card information stored in the memory 170 according to the comparison result, the controller 180 may output notification information indicating that the card is not identified.

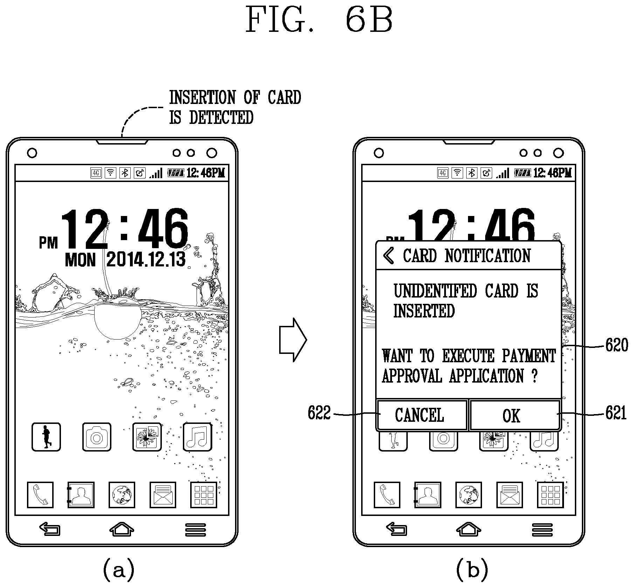

For example, as illustrated in (a) and (b) of FIG. 6B, in a case in which the received identification information does not match the plurality of pieces of card information stored in the memory 170, the controller 180 may display notification information indicating that the card is not identified on the pop-up window 620. Thus, the user may recognize that the current card module currently inserted into the card module is a card of someone else or his or her own card but has not been registered to the mobile terminal.

When insertion of an unidentified card is sensed, the controller 180 may operate i) in the payment approval mode or ii) limits execution of the payment application.

For example, as illustrated in (b) of FIG. 6B, the controller 180 may output graphic objects 621 and 622 for executing the payment approval mode on the pop-up window 620. Thus, the user may approve payment using the unidentified card.

In another example, as illustrated in (a) and (b) of FIG. 6C, when an unidentified card is inserted, the controller 180 may output a pop-up window 630 including notification information for card removal, without executing the payment application. In this case, the user may recognize that a card limited in performing payment is inserted, and remove the card from the card module.

Meanwhile, unlike the above description, when a card is inserted, the controller 180 may operate in any one of the payment mode and the payment approval mode, regardless of checking identification information. That is, checking identification information is a certain step which may be omitted.

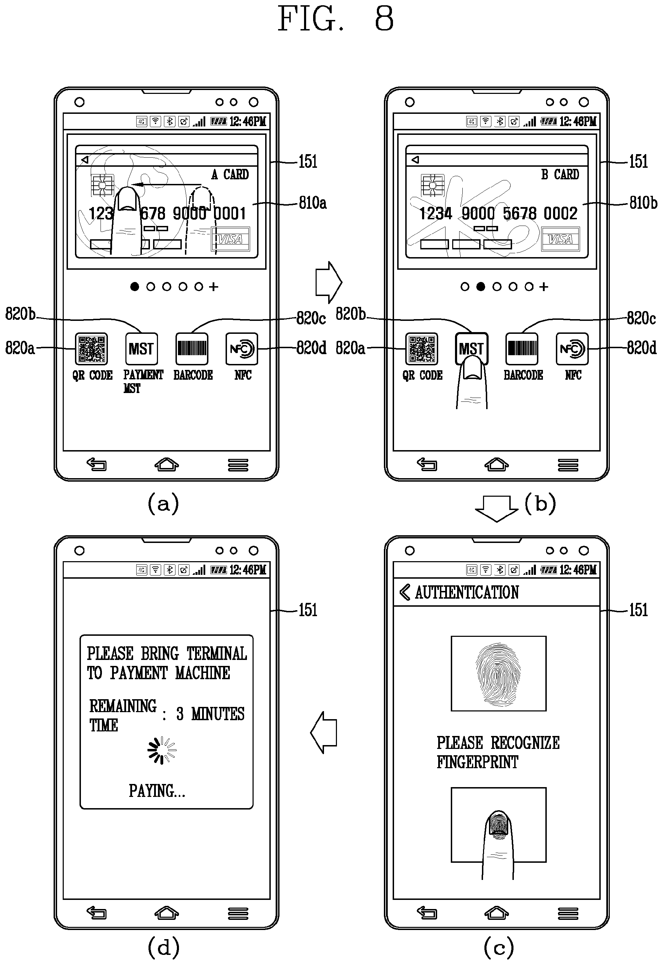

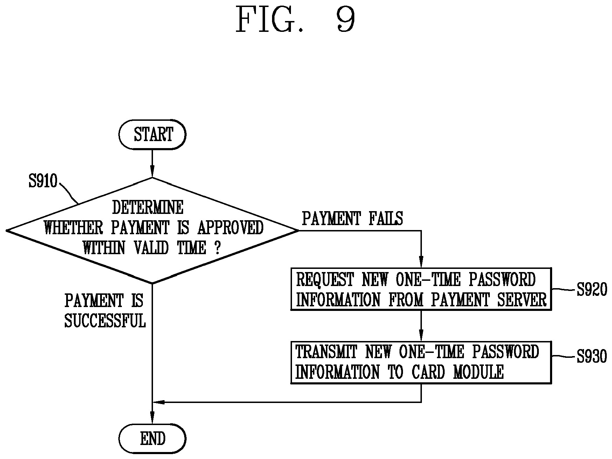

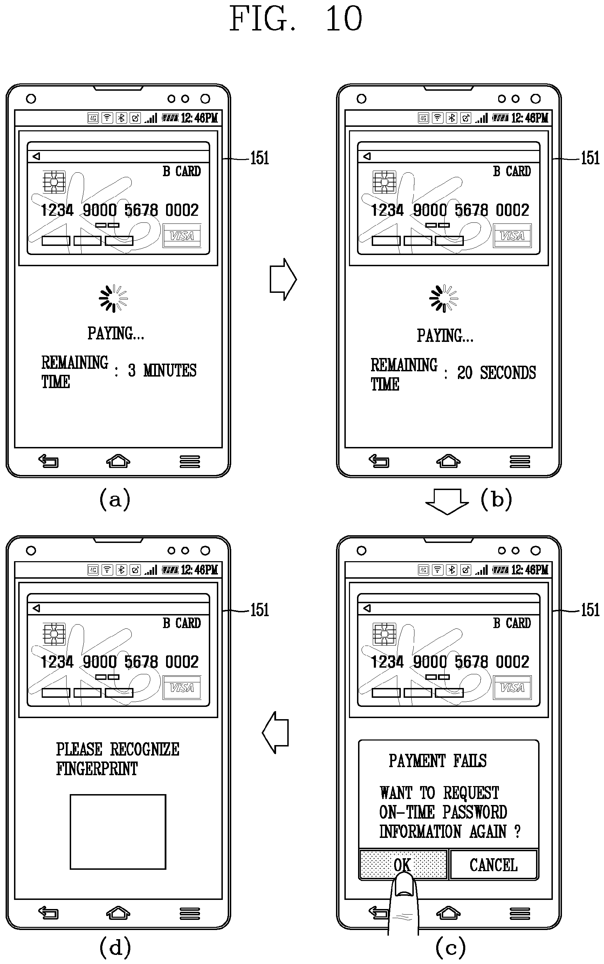

Hereinafter, an operation of the payment mode according to the present disclosure will be described. FIGS. 7A and 7B are flow charts illustrating a control method of performing payment in a payment mode in a mobile terminal related to the present disclosure. FIG. 8 is a conceptual view illustrating a method of performing payment in a payment mode related to the present disclosure. FIG. 9 is a flow chart illustrating a control method related to one-time password information in a payment mode in a mobile terminal related to the present disclosure. FIG. 10 is a conceptual view illustrating the control method of FIG. 9.

When it is sensed that a card is inserted into the card module 300, the controller 180 of the mobile terminal 100 according to the present disclosure may operate in any one of the payment mode and the payment approval mode.

Here, as described above with reference to FIG. 5, when a magnetic applet is present in the card 200 inserted into the card module 300, the controller 180 may operate in the payment mode. That is, the card 200 inserted into the card module 300 may be a payment card 200b.

In detail, referring to FIG. 7A, when the controller operates in the payment mode, the controller 180 may execute a payment application according to the payment mode (S710).

When the payment application is executed, the controller 180 may display an execution screen of the payment application on the display unit 151.

When the execution screen of the payment application is displayed, the controller 180 may select a specific card to perform payment among one or more pieces of card information stored in the payment card 200b (S720).

The execution screen of the payment application may include a plurality of card images respectively matched to the plurality of pieces of card information received from the card 200b inserted into the card module 300.

Here, only one of the plurality of card images may be displayed on the execution screen of the payment application and the other card images may be sequentially displayed according to a user's flocking input applied to the displayed card image.

That is, the user may select a specific card image among the plurality of card images through a flicking input. Also, the user may select a plurality of card images through various methods, and this is a design element not limited to the aforementioned method.

When a specific card image among the plurality of card images is selected, the controller 180 may set a card corresponding to the specific card image, as a payment target card.

When the payment target card is set, the controller 180 may request one-time password information from a payment server linked to the card set as the payment target card (S730).

When the payment target card is set, the controller 180 may perform wireless communication with the payment server linked to the card in order to perform payment with the card set as the payment target card.

The payment server is a separately set server which may provide a platform service from a card company or a card manufacturer.

The controller 180 may request one-time password information from the payment server through communication. Here, the one=time password information is password information generated using random numbers randomly generated to perform authentication. The one-time password may be generated according to a user request whenever payment is performed, and once generated, the password information should be used within a predetermined time. That is, when the predetermined time has lapsed, the one-time password information may not be valid. The one-time password information may also be termed a one-time password (OTP).

The controller 180 may transmit the received one-time password information to the card module such that payment may be performed using the received one-time password information (S740).

When the one-time password information is received from the payment server, the controller 180 may transmit the one-time password information to the card module 300 through a USB communication module.

Referring to FIG. 7B, when the one-time password information is received from the controller 180, the card module 300 may transmit the one-time password information to the payment card 200b through the IC controller 370 (S750). Here, the payment card 200b refers to a card inserted into the accommodation region 301 of the card module 300.

The payment card 200b may receive the one-time password information through the IC chip unit 260. The IC chip unit 260 may generate magnetic information using the one-time password information and a magnetic applet stored in the memory of the IC chip unit 260.

The magnetic information is information as a base for conversion into a magnetic stripe signal. The magnetic stripe signal is a signal generated using a principle of recording information using electromotive force generated in an electric line when a magnetic line of a magnetized magnet traverses the electric line.

The magnetic stripe signal reaches the payment machine to generate electromotive force in the payment machine, and the payment machine may read magnetic information included in the magnetic stripe signal on the basis of the generated electromotive force.

When the magnetic information is generated, the payment card 200b may transmit the magnetic information to the card module 300 such that a magnetic stripe signal is generated (S760). Here, the payment card 200b may transmit magnetic information through the IC controller 370 of the card module 300 in contact with the IC chip unit 260.

When the magnetic information is received from the payment card 200b, the microcontroller 380 of the card module 300 may transfer the magnetic information to the magnetic unit 350 such that a magnetic stripe signal is generated.

The magnetic unit 350 may convert the magnetic information into a magnetic stripe signal (S770). In detail, when the magnetic information is received, the magnetic unit 350 may convert the magnetic information into a current signal and a booster may amplify the converted current signal. Thereafter, the coil may convert the current signal amplified by the booster into a magnetic stripe signal.

Meanwhile, in a case in which the magnetic unit 350, specifically, a coil, is present on the rear side of the mobile terminal, the controller 180 may transmit a current to the coil. In this case, the coil present on the rear side of the mobile terminal may generate a magnetic stripe signal.

The magnetic stripe signal may be transmitted to the outside (S780). Here, the controller 180 may supply power required for the card module 300 to generate the magnetic stripe signal, to the card module 300. That is, the card module 300 may amplify the current signal through power supplied from the mobile terminal, and generate the magnetic stripe signal.

That is, in the present disclosure, even though the card is not directly contact the payment machine, the magnetic stripe signal may be transmitted to the payment machine. Also, even an IC card unable to perform magnetic stripe payment may perform magnetic stripe payment through the card module.

So far, the control flow in the payment mode of the present disclosure has been described. Hereinafter, an operational state of the mobile terminal in the payment mode of the present disclosure will be described with reference to the accompanying drawings.

As illustrated in (a) of FIG. 8, when a payment application is executed in the payment mode, the controller 180 may output an execution screen of the payment application on the display unit 151. The execution screen of the payment application may include a first card image 810a, among a plurality of card images, and graphic objects 820a, 820b, 820c, and 820d representing payment schemes.

When a flicking input is applied to the first card image 810a, the controller 180 may output a second card image 810b among the plurality of card images. That is, the user may select a card to perform payment through a flicking input.

In a state in which the second card image 810b is selected, a user request for performing MST payment may be received. Here, the MST payment refers to payment using a magnetic stripe signal. For example, as illustrated in (b) of FIG. 8, the controller 180 may select a graphic object 820b for MST payment.

In this case, the controller 180 may perform user authentication for MST payment. For example, as illustrated in (c) of FIG. 8, the controller may perform user authentication through fingerprint recognition. Here, as the fingerprint method, various known schemes may be used, and this is obvious to a person skilled in the art, and thus, a detailed description thereof will be omitted.

When user authentication through fingerprint recognition is completed, the controller 180 may request one-time password information from the payment server. A description of a follow-up procedure will be replaced with the description of FIGS. 7A and 7B.

Meanwhile, as illustrated in (d) of FIG. 8, when the magnetic stripe signal is being transmitted to the outside, the controller 180 may display a time during which the magnetic stripe signal is transmitted, on the display unit 151. Accordingly, the user may recognize a valid time available for payment. Here, the valid time may match a valid time of one-time password information.

Meanwhile, when payment is not performed within the valid time, the controller 180 may transmit a request for stopping the magnetic stripe signal to the card module 300. Thus, the card module 300 may stop transmission of the magnetic stripe signal.

This will be described in detail with reference to FIGS. 9 and 10. First, the controller 180 may determine whether payment is performed within the valid time (S910).

For example, as illustrated in (a) and (b) of FIG. 10, the controller 180 may display valid time information on the display unit 151.

The controller 180 may receive payment approval information from a payment server within the valid time through communication. Here, when the payment approval information is received within the valid time, the controller 180 may determine that payment has been performed.

Meanwhile, if payment approval information is not received from the payment server within the valid time, the controller 180 may determine that payment has not been performed.

When it is determined that payment has not been performed, the controller 180 may request new one-time password information from the payment server on the basis of a user request (S920). That is, the controller 180 may request new one-time password information from the payment server in order to generate new magnetic information.

For example, as illustrated in (c) of FIG. 10, the controller 180 may display screen information requesting one-time password information on the display unit 151. Thereafter, when a request for new one-time password information is received, the controller 180 may display screen information for performing user authentication on the display unit 151. For example, as illustrated in (d) of FIG. 10, the controller 180 may output screen information for fingerprint recognition.

When user authentication is successful, the controller 180 may request one-time password information from a payment server. Meanwhile, in the present disclosure, user authentication is a certain step which may be omitted.

Thereafter, when new one-time password information is received from the payment server, the controller 180 may transmit the new one-time password information to the card module 300 through a USB communication module (S930).

The microcontroller 380 of the card module 300 may transmit the new one-time password information to the IC chip unit 260 of the card 200, and may receive new magnetic information generated on the basis of the new one-time password information from the card 200.

Thereafter, the microcontroller 380 may transmit new magnetic information to the magnetic unit 350. The magnetic unit 350 may transmit a new magnetic stripe signal outwardly on the basis of the new magnetic information.

In this manner, in the present disclosure, security of performing payment may be strengthened.

In the above, the method of performing payment in the payment mode according to the present disclosure has been described. Thus, the user may perform non-contact type payment using a card available only for contact type payment.

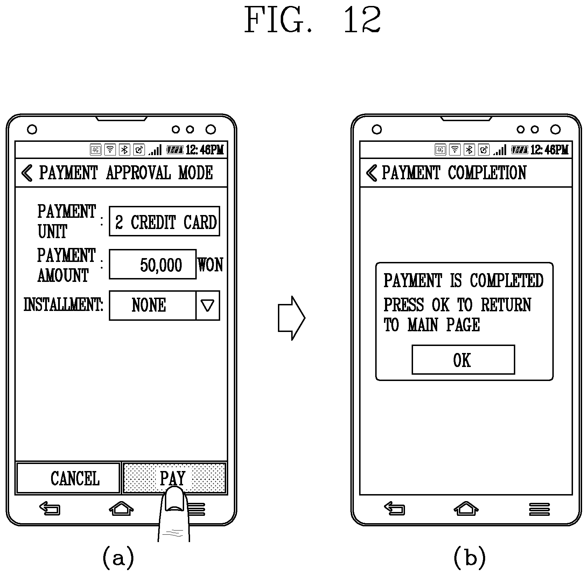

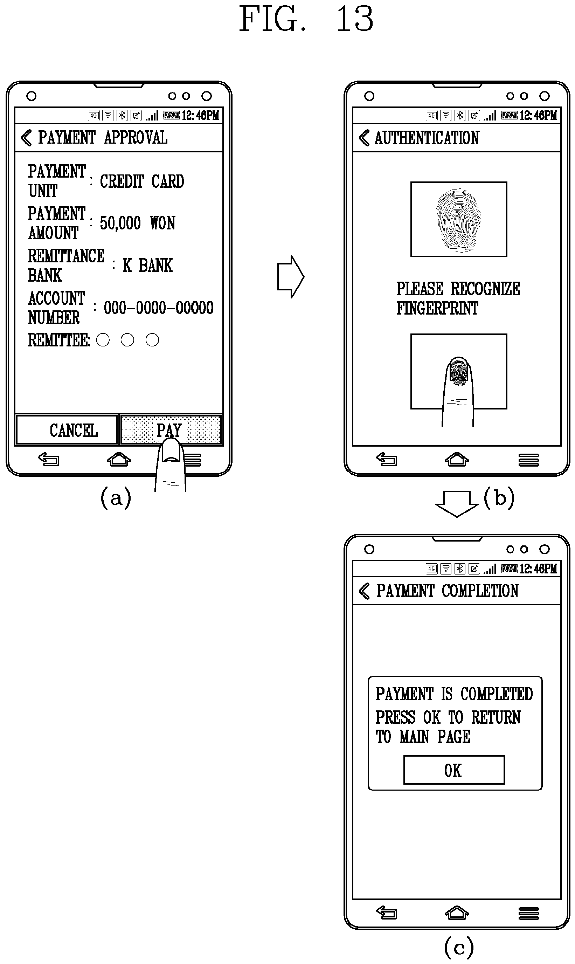

Hereinafter, a payment approval mode according to the present disclosure will be described. FIGS. 11A and 11B are flow charts illustrating a payment approval procedure performed in a payment approval mode in a mobile terminal related to the present disclosure. FIG. 12 is a conceptual view illustrating an en example of approving payment in a payment approval mode in a mobile terminal related to the present disclosure. FIG. 13 is a conceptual view illustrating another example of approving payment in a payment approval mode in a mobile terminal related to the present disclosure.

Referring to FIG. 11A, when a magnetic applet is not present on the card 200, the controller 180 of the mobile terminal according to the present disclosure may operate in the payment approval mode (S1110).

When the controller 180 operates in the payment approval mode, the controller 180 may execute a payment approval application according to the payment approval mode.

When the payment approval application is executed, the controller 180 may display an execution screen of the payment approval application on the display unit 151.

Referring to (a) of FIG. 12, the execution screen of the payment approval application may include input windows for inputting required information in performing payment approval, such as an input window for selecting a payment unit, a payment amount input window, an input window for selecting the number of months of installment, and the like.

When payment approval information is input from the user through the payment approval application, the controller 180 may receive card information from the card module 300. Here, the card information may be information stored in the IC chip unit 260 of the card, which may be an identification number, or the like, of the card.

When the card information is received, the controller 180 may perform payment on the basis of the card information (S1120).

The controller 180 may transmit a payment request to the payment server 400 linked to the card corresponding to the card information on the basis of the card information.

To this end, referring to FIG. 11B, the controller 180 of the mobile terminal 100 may receive card information (e.g., IC information) from the card 200. In detail, the controller 180 may request card information from the card module 300 and the card module 300 may request card information from the card 200.

In response to the request for card information, the card 200 transmits card information to the card module 300, and the card module 300 may transmit the card information to the controller 180.

Thereafter, the controller 180 may transmit the card information and the payment approval information to the payment server 400 and request payment.

The payment server 400 may determine whether to approve payment on the basis of the card information and the payment approval information. For example, the payment server 400 may compare the card information and the payment approval information and approve payment or reject approval.

When payment is approved, the payment server 400 may transmit payment approval information to the controller 180. In this case, the controller 180 may check that payment has been approved, and informs the user accordingly. For example, as illustrated in (b) of FIG. 12, the controller 180 may display a pop-up window indicating that payment has been completed, on the display unit 151.

However, when payment is not approved, the payment server 400 may transmit approval rejection information to the controller 180. In this case, the controller 180 may check that approval of payment has been rejected, and output notification information indicating the rejection of the approval of payment on the display unit 151.

That is, when the mobile terminal according to the present disclosure operates in the payment approval mode, the mobile terminal may serve as a payment machine through direct communication with the payment server.

Meanwhile, in the payment approval mode, the mobile terminal according to the present disclosure may perform payment through communication with the payment server or may perform p2p type payment. Here, the p2p type payment refers to a scheme in which payment is performed between individuals.

In detail, in the payment approval mode, the controller 180 may transmit payment approval information and card information to the payment server such that a payment amount may be directly transferred to a specific bank account. The payment server 400 may be a server dedicated for p2p payment or may be a server of a card company or a bank.

When the payment server 400 approves payment on the basis of the payment approval information and the card information, the payment server 400 may directly transfer the approved payment amount to a specific band account.

For example, the user may insert a card of someone else, rather than his or her own card, into the accommodation region 301 of the card module. Here, as illustrated in (a) of FIG. 13, when the card information of the card of someone else is received, the controller 180 may receive a payment amount and an account number for p2p payment, and perform user authentication.

For example, as illustrated in (b) of FIG. 13, the controller 180 may display screen information for fingerprint recognition on the display unit 151, for user authentication. The owner of the card may input a fingerprint through the display unit 151.

Thereafter, the controller 180 transmits user authentication information, payment approval information, and card information to the payment server 400. The payment server 400 may approve payment on the basis of the user authentication information, payment approval information, and card information.

In this manner, the user may simply perform p2p payment.

As described above, in the mobile terminal according to the present disclosure, since the card module which can be electrically coupled to the mobile terminal is provided, a card is inserted into the card module, and data related to payment is transmitted to and received from the mobile terminal, whereby non-contact type payment of the card may be performed. Thus, in the present disclosure, non-contact type payment may be performed with the card available for contact type payment even without an additional electronic component.

Also, in the mobile terminal according to the present disclosure, the payment mode and the payment approval mode may be automatically executed according to the presence of a magnetic applet, information required for performing magnetic payment, on the card inserted into the card module. Thus, in the present disclosure, a payment approval service may also be provided together, as well as the payment service using the card inserted into the card module.

In addition, in the mobile terminal according to the present disclosure, since the non-contact type payment is performed even without an additional component on the card, manufacturing cost of the card may be reduced.

The present invention described above may be implemented as a computer-readable code in a medium in which a program is recorded. The computer-readable medium includes any type of recording device in which data that can be read by a computer system is stored. The computer-readable medium may be, for example, a hard disk drive (HDD), a solid state disk (SSD), a silicon disk drive (SDD), a ROM, a RAM, a CD-ROM, a magnetic tape, a floppy disk, an optical data storage device, and the like. The computer-readable medium also includes implementations in the form of carrier waves (e.g., transmission via the Internet). Also, the computer may include the controller 180 of the terminal. Thus, the foregoing detailed description should not be interpreted limitedly in every aspect and should be considered to be illustrative. The scope of the present invention should be determined by reasonable interpretations of the attached claims and every modification within the equivalent range are included in the scope of the present invention.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a main body(100);
a card module(300) detachably coupled to the main body(100), wherein the card module(300) includes a region sized to receive a payment card; and
a controller(180) configured to:
operate in a payment mode in which payment is performed when the payment card is received in the region of the card module(300) and a magnetic applet is present in the payment card; and
operate in an approval mode in which payment is to be approved when the payment card is received in the region of the card module(300) and a magnetic applet is not present in the payment card.

2. The mobile terminal of claim 1, wherein the card module(300) comprises:
an IC controller(370) positioned to face an IC chip of the payment card when the payment card(200a) is received in the region of the card module(300), wherein the IC controller(370) permits data communication between the card module(300) and the payment card; and
a microcontroller(380) configured to control the IC controller(370) to determine when the magnetic applet is present in the payment card.

3. The mobile terminal of claim 2, wherein the microcontroller(380) is further configured to transmit a notification signal through the IC controller(370) indicating the presence of the magnetic applet to the controller when it is determined that the magnetic applet is present in the payment card.

4. The mobile terminal of claim 2 to 3, wherein the card module(300) further includes a sensor positioned on an inner side of the region and being configured to detect when the payment card is received in the region of the card module(300), and
wherein the microcontroller(380) is further configured to transmit a notification signal indicating the payment card is received in the region of the card module(300) when the sensor detects that the payment card is received in the region of the card module(300).

5. The mobile terminal of claim 1 to 4, further comprising:
a display(151), wherein the controller(180) is further configured to:
cause the display(151) to display card information stored on the payment card when the payment card is received in the region of the card module(300); and
select a card for payment among the displayed card information in response to an input.

6. The mobile terminal of claim 5, wherein the controller(180) is further configured to:
receive a one-time password information from a payment server corresponding to the selected card, and provide the one-time password information to the card module(300), when the card for payment is selected among the displayed card information.

7. The mobile terminal of claim 6, wherein the card module(300) provides the one-time password information to the payment card in order to receive magnetic payment information from the selected card.

8. The mobile terminal of claim 7, wherein the card module(300) transmits a magnetic stripe signal according to the magnetic payment information received from the selected card.

9. The mobile terminal of claim 8, wherein the card module(300) further includes a coil converting an electric signal into the magnetic stripe signal.

10. The mobile terminal of claim 8, wherein the magnetic payment information includes the one-time password information and the card information.

11. The mobile terminal of claim 1 to 2, wherein the controller(180) is further configured to:
receive card information of the payment card when operating in the approval mode and payment amount information is input; and
perform payment according to the received card information.

12. The mobile terminal of claim 1 to 2, further comprising:
a power supply(190);
a first contact terminal coupled to one side of the power supply unit(190); and
a second contact terminal located in the card module(300) and coupled on a side of the card module(300) facing the first contact terminal to permit electrical coupling to the first contact terminal,
wherein the controller(180) is further configured to cause the power supply to supply power through the first contact terminal and the second contact terminal to permit the card module(300) to convert an electric signal into a magnetic signal.

13. The mobile terminal of claim 1 to 2, wherein the region of the card module(300) overlaps a portion of a rear side of the main body(100).

14. The mobile terminal of claim 13, further comprising:
a coil(305) converting an electric signal into a magnetic signal,
wherein the coil(305) is disposed in a position farther from the main body(100) than the card with respect to the main body(100) on the card module(300).

15. The mobile terminal of claim 14, wherein the coil(305) is disposed in a region of a rear side of the main body(100) that does not overlap the card module(300).
